(19) Europäisches Patentamt

European Patent Office

Office européen des brevets

(11) Publication number: **0 046 156**
**B1**

(12) EUROPEAN PATENT SPECIFICATION

(45) Date of publication of patent specification: **13.02.85**

(21) Application number: **80302810.9**

(22) Date of filing: **14.08.80**

(51) Int. Cl.⁴: **F 02 D 21/08, F 02 B 37/00, F 02 B 47/08**

(54) **Turbocharged engine with pressurized gas recirculation.**

(43) Date of publication of application:
**24.02.82 Bulletin 82/08**

(45) Publication of the grant of the patent:
**13.02.85 Bulletin 85/07**

(84) Designated Contracting States:
**DE FR GB IT SE**

(56) References cited:
**DE-A-2 810 916**
**FR-A-1 347 532**
**FR-A-2 283 314**
**FR-A-2 413 548**

(73) Proprietor: **Aya, Kazim Kadri**
**P.K. 764**
**Karakoy Istanbul (TR)**

(72) Inventor: **Aya, Kazim Kadri**
**P.K. 764**
**Karakoy Istanbul (TR)**

(74) Representative: **Valentine, Francis Anthony**
**Brinsley et al**
**REDDIE & GROSE 16 Theobalds Road**
**London WC1X 8PL (GB)**

EP 0 046 156 B1

## Description

This invention relates to exhaust-gas-turbocharged internal combusion engines, for example for vehicles.

Many different types and variations of internal combustion engines, specifically engines for vehicles, have utilized turbochargers so as to increase the compression ratio and thereby increase the power generated by the engine. The turbocharger conventionally has the turbine section thereof driven by exhaust gases, with the turbine section driving a compressor section for increasing the pressure of the fuel-air mixture or air as supplied to the combustion chambers. The exhaust gas; after driving the turbine section, is normally discharged to the atmosphere in a conventional manner. While the use of turbochargers in this manner has proven desirable with respect to the ability of increasing the compression ratio, nevertheless this mode of operation also normally requires that an increased quantity of fuel-air mixture or air be supplied to the combustion chamber. This thus decreases the fuel efficiency of the engine, and also increases the quantity of undesired emissions in the exhaust gases. This operation also normally requires the use of higher octane fuel, and results in the engine running at a significantly higher temperature. The advantage of utilizing a turbocharger thus causes disadvantages which, in many instances, are of overriding importance so as to prevent the practical use of a turbocharger.

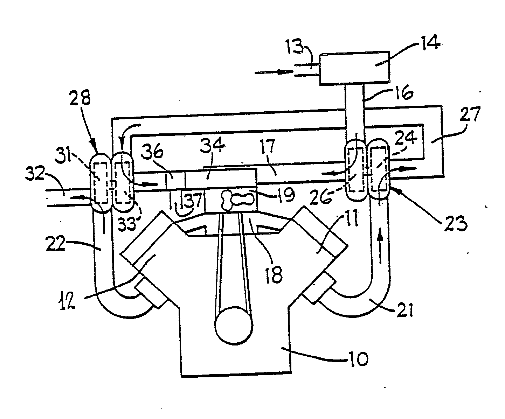

The invention is concerned with positive-displacement internal combustion engines of the kind having a plurality of combustion chambers and a first exhaust-gas-driven turbocharger arranged to pressurize the inlet system of the engine, and in which a duct leads from the outlet of the turbine of the first turbocharger to deliver exhaust gas to the inlet of the compressor of a second exhaust-gas-driven turbocharger. An engine of this kind has been proposed in DE—A—2810 916 (=GB—A—1552312), (with reference to Figure 7 thereof). However, in this proposed construction, the two turbochargers have their turbines connected in series and their compressors connected in series so that all of the inlet air passes through both compressors and all of the exhaust gas from all of the combustion chambers passes through the turbine of the first turbocharger.

There has also been proposed in FR—A—2413548 (=US—A—4179892) a multi-cylinder internal combustion engine having two exhaust manifolds one of which connects only some of the combustion chambers to the turbine of a single turbocharger for the engine while the second manifold is connected to the remainder of the combustion chambers conveys some exhaust gas through a control valve to the pressurized inlet of the engine and the remainder of the gas from the second exhaust manifold is delivered to the turbine of the turbocharger.

A positive-displacement internal combustion engine of the kind with which the invention is concerned is characterised in that only some of the combustion chambers are connected by a first exhaust gas manifold to the turbine of the first turbocharger, others of the combustion chambers are connected by a second manifold, isolated from the first manifold, to the turbine of the second turbocharger and the outlet of the compressor of the second turbocharger is connected to deliver pressurized exhaust gas to the inlet system. Such an arrangement permits a portion of the exhaust gases to be resupplied to the combustion chambers to achieve higher compression ratios while permitting the use of very lean fuel-air mixtures, thereby permitting more efficient utilization of fuel, and resulting in reduction of undesirable emissions in the exhaust gases. This also enables the utilization of a low octane fuel, permits the engine to run cooler, and enables fast warm-up of the engine to the normal operating temperature. This improved internal combustion engine is thus desirable for use on vehicles since it permits the achievement of a higher power output from the engine, while at the same time providing for more efficient utilization of fuel.

An embodiment of the invention will now be described by way of example with reference to the accompanying drawing, in which:—

The single figure diagrammatically illustrates a conventional internal combustion engine of the twin-bank multi-cylinder type, such as a V-8 engine, having the improved turbocharger arrangement of the present invention associated therewith as seen from the front of the engine.

Referring to the drawing, there is diagrammatically illustrated a conventional internal combustion engine of the type typically utilized in vehicles, which engine is conventionally of the spark-ignition type but can also be of the compression-ignition type. The engine is of a conventional multiple cylinder construction and, in the illustration, is of the type commonly referred to as a V-8 or V-6 inasmuch as half of the cylinders are disposed within the cylinder bank 11 and the remaining cylinders are disposed in the other cylinder bank 12. The construction and operation of such an internal combustion engine is well known.

The engine is provided with an inlet 13 through which air is supplied to a carburetor 14, with the fuel-air mixture from the carburetor being supplied through the inlet conduits 16 and 17 to the intake manifold 18 for distribution to the combustion chambers associated with the cylinders. If desired, a conventional supercharger 19 can be associated with the inlet conduit 17, directly upstream of the intake manifold 18, which supercharger is typically mechanically driven from the engine crankshaft so as to achieve higher pressurization of the air-fuel mixture.

The exhaust gases from the cylinders associated with the banks 11 and 12 are discharged into exhaust manifolds 21 and 22, respectively. The hot exhaust gases in the manifold 21 are utilized for powering a conventional turbocharger 23. The turbocharger 23 includes a conventional turbine section 24 which is rotatably driven by the hot exhaust gases, which turbine section in turn rotatably drives the compressor section 26, the latter being associated with the intake conduits 16 and 17 so as to pressurize the air-fuel mixture which is supplied in the intake manifold 18. The structure and operation of the turbocharger 23 is thus conventional.

The hot exhaust gases within the manifold 21, after driving the turbine section 24, are then discharged therefrom into an intermediate conduit 27 which supplies these exhaust gases to the compressor section 33 of a further turbocharger 28. This turbocharger 28 again includes a turbine section 31 which communicates with the other exhaust manifold 22 so that the hot exhaust gases therein cause rotation of the turbine section 31, following which these exhaust gases are then exhausted through the conduit 32 to the atmosphere in a conventional manner, such as through a conventional muffler arrangement.

The turbine section 31 in turn rotatably drives the compressor section 33, which compressor section communicates with the intermediate conduit 27 and hence causes pressurization of the hot exhaust gases which are being supplied therethrough. The hot exhaust gases pressurized by the compressor section 33 are then supplied to a further inlet conduit 34, which in turn communicates with the intake manifold 18, whereupon the pressurized exhaust gases are thus intermixed with the air-fuel mixture supplied through the other inlet conduit 17.

The inlet conduit 34 has an adjustable by-pass valve 36 associated therewith so as to regulate the quantity of pressurized exhaust gases which are supplied to the intake manifold 18. When this by-pass valve 36 is at least partially open, then a fraction of the pressurized exhaust gases within conduit 34 are bled off into the exhaust passage 37 for discharge to the atmosphere.

The operation of the engine according to the present invention is believed self-evident from the above description, but same will be briefly explained to insure a complete understanding thereof.

During operation of the engine, the fuel-air mixture is supplied through the inlet conduits 16 and 17 into the intake manifold 18, from which this mixture is then supplied to the combustion chambers of the individual cylinders. After combustion, the exhaust gases from the individual cylinders flow into the exhaust manifolds 21 and 22. The hot exhaust gases from manifold 21 are utilized to drive the turbine section 24 of the first turbocharger 23, which in turn drives the compressor section 26 so that the fuel-air mixture within inlet conduits 16—17 is thus pressurized. The mixture within the intake manifold 18 is thus at a higher pressure level to permit the creation of a higher compression ratio within the combustion chambers. The exhaust gases, after discharge from the turbine section 24, then flow through the intermediate conduit 27 and are supplied to the compressor section 33 of the second turbocharger 28. The turbine section 31 of this latter turbocharger is in turn driven by the exhaust gases supplied through the other exhaust manifold 22, which exhaust gases are then discharged from the turbine section into the passage 32 for discharge to the atmosphere in the usual manner. The pressurized exhaust gases from the compressor section 33 flow into the inlet conduit 34 and, depending upon the position of the bypass valve 36, some or all of these pressurized exhaust gases are supplied to the intake manifold 18 for intermixing with the fuel-air mixture therein. This resulting mixture is thus supplied to the combustion chambers so as to achieve the desired high compression ratio, while at the same time the mixture possesses a smaller quantity of fuel than would otherwise be required if the exhaust gases had not been at least partially resupplied to the combustion chambers. The heat of the exhaust gases also causes preheating of the fuel-air mixture to further facilitate the efficient combustion thereof within the engine. This also minimizes the amount of undesired exhaust emissions.

While the above explanation and the accompanying drawing illustrates the engine utilizing a conventional carburetor so that the fuel-air mixture flows through conduits 16—17 into the intake manifold, it will be appreciated that the engine of the present invention can also utilize a conventional fuel injection system if desired, in which case the carburetor 14 would be eliminated and solely air would be supplied through the inlet conduits 16—17.

The combustion engine as above described is also of the V-type, although it will be appreciated that the present invention is equally applicable to an engine of any configuration, such as an engine wherein the cylinders are disposed in a straight line.

The present invention is believed to have the most significant effect in terms of increasing the power and fuel economy when utilized on a conventional multiple cylinder four-cycle spark-ignition engine. However, the present invention is also applicable to the conventional compression-ignition engine of the two-cycle type.

## Claims

1. A positive-displacement internal combustion engine having a plurality of combustion chambers (11, 12) and a first exhaust-gas-driven turbocharger (23) arranged to pressurize the inlet system (34, 18) of the engine, and in which a duct (27) leads from the outlet of the turbine (24) of the first turbocharger to deliver exhaust gas to the inlet of the compressor (33) of a second exhaust-gas-driven turbocharger (28), characterized in that only some of the combustion chambers are connected by a first exhaust gas manifold (21) to the turbine (24) of the first turbocharger (23), others of the combustion chambers are connected by a second manifold (22), isolated from the first manifold (21), to the turbine (31) of the second turbocharger (28) and the outlet of the compressor (33) of the second turbocharger is connected to deliver pressurized exhaust gas to the inlet system.

2. An engine according to Claim 1, characterized in that the engine is of the twin bank piston and cylinder type, and the exhaust manifolds (21, 22) are associated respectively one with each bank (11, 12) of cylinders.

3. An engine according to Claim 1 or Claim 2, characterized in that the inlet system includes an intake manifold (18) in communication with at least some of the combustion chambers, a first inlet conduit (17) providing communication between the intake manifold (18) and the outlet of the compressor section (26) of the first turbocharger (23), and a second inlet conduit (34) providing communication between the intake manifold (18) and the outlet of the compression section (33) of the second turbocharger (28).

4. An engine according to Claim 3, characterized in that a bypass valve (36) is associated with the second inlet conduit (34) for selectively permitting at least some of the pressurized exhaust gases to be diverted from entering the intake manifold (18).

5. An engine according to Claim 3 or Claim 4, characterized in that the inlet system includes a conduit (16) connected to the inlet of the compressor section (26) of the first turbocharger (23) for supplying an air-fuel mixture thereto, and the inlet to the compressor section (33) of the second turbocharger (28) is connected solely to an intermediate conduit (27) which at its other end is connected to the outlet of the turbine section (24) of the first turbocharger (23) so that only exhaust gases are supplied to the compressor section (33) of the second turbocharger (28).

## Revendications

1. Moteur à combustion interne à déplacement positif, comportant plusieurs chambres de combustion (11, 12) et un premier turbocompresseur (23) actionné par les gaz d'échappement disposé de manière à mettre en pression le système d'admission (34, 18) du moteur, et dans lequel un conduit (27) forme une liaison depuis la sortie de la turbine (24) du premier turbocompresseur pour acheminer les gaz d'échappement jusqu'à l'entrée du compresseur (33) d'un second turbocompresseur (28) actionné par les gaz d'échappement, caractérisé en ce que seulement certaines des chambres de combustion sont reliées à la turbine (24) du premier turbocompresseur (23) par un premier collecteur (21) de gaz d'échappement, les autres chambres de combustion étant reliées à la turbine (31) du second turbocompresseur (28) par un second collecteur (22) isolé par rapport au premier collecteur (21), et la sortie du compresseur (33) du second turbocompresseur étant reliée au système d'admission de manière à acheminer des gaz d'échappement sous pression.

2. Moteur selon la revendication 1, caractérisé en ce que le moteur est du type à double rangée de cylindres et pistons, et en ce que les collecteurs d'échappement (21, 22) sont associés respectivement à chacune des rangées (11, 12) de cylindres.

3. Moteur selon la revendication 1 ou la revendication 2, caractérisé en ce que le système d'admission comprend un collecteur d'admission (18) en communication avec au moins certaines des chambres de combustion, un premier conduit d'entrée (17) fournissant une communication entre le collecteur d'admission (18) et la sortie de la zone (26) formant le compresseur du premier turbocompresseur (23), et un second conduit d'entrée (34) fournissant une communication entre le collecteur d'admission (18) et la sortie de la zone (33) formant la compression du second turbocompresseur (28).

4. Moteur selon la revendication 3, caractérisé en ce qu'une valve de dérivation (36) est associée au second conduit d'entrée (34) pour permettre sélectivement à au moins une partie des gaz d'échappement sous pression d'être empêchés d'entrer dans le collecteur d'admission (18).

5. Moteur selon la revendication 3 ou la revendication 4, caractérisé en ce que le système d'admission comprend un conduit (16) relié à l'entrée de la zone (26) formant le compresseur du premier turbocompresseur (23) et destiné à fournir un mélange air-carburant à ce dernier, et en ce que l'entrée de la zone formant le compresseur (33) du second turbocompresseur (28) est reliée uniquement à un conduit intermédiaire (27) qui est relié par son autre extrémité à la sortie de la zone (24) formant la turbine du premier turbocompresseur (23), de sorte que seuls des gaz d'échappement sont fournis à la zone (33) formant le compresseur du second turbocompresseur (28).

## Patentansprüche

1. Verbrennungsmotor der Verdrängerbauweise mit einer Anzahl von Verbrennungsräumen (11, 12) und einem ersten Abgasturbolader (23) zur Druckbeaufschlagung des Einlaßsystems (34, 18) des Motors, und in welchem ein Kanal (27) vom Auslaß der Turbine (24) des ersten Turboladers führt zur Abgaslieferung zum Einlaß des Verdichters (33) eines zweiten Abgasturboladers (28), dadurch gekennzeichnet, daß nur einige der Verbrennungsräume durch eine erste Abgasleitung (21) mit der Turbine (24) des ersten Turboladers (23) verbunden sind, andere der Verbrennungsräume durch eine zweite Leitung (22), die von der ersten Leitung (21) isoliert ist, mit der Turbine (31) des zweiten Turboladers (28) verbunden sind und der Auslaß des Verdichters (33) des zweiten Turboladers so verbunden ist, daß unter Druck stehendes Abgas dem Einlaßsystem zugeführt wird.

2. Motor nach Anspruch 1, dadurch gekennzeichnet, daß dieser von der Bauweise mit V-förmig angeordneten Zylindern ist und jeweils eine der Abgasleitungen (21, 22) jedem Satz (11, 12) von Zylindern zugeordnet ist.

3. Motor nach Anspruch 1 oder Anspruch 2, dadurch gekennzeichnet, daß das Einlaßsystem umfaßt eine Ansaugleitung (18) in Verbindung mit mindestens einigen der Verbrennungsräume, eine erste Einlaßleitung (17) zur Verbindung zwischen der Ansaugleitung (18) und dem Auslaß des Verdichterteils (26) des ersten Turboladers (23), und eine zweite Einlaßleitung (34) zur Verbindung zwischen der Ansaugleitung (18) und dem Auslaß des Verdichterteils (33) des zweiten Turboladers (28).

4. Motor nach Anspruch 3, dadurch gekennzeichnet, daß ein Umgehungsventil (36) der zweiten Einlaßleitung (34) zugeordnet ist, um selektiv zu ermöglichen, daß mindestens ein Teil der unter Druck stehenden Abgase davon abgelenkt wird, in die Ansaugleitung (18) einzutreten.

5. Motor nach Anspruch 3 oder Anspruch 4, dadurch gekennzeichnet, daß das Einlaßsystem umfaßt eine Leitung (16), die mit dem Einlaß des Verdichterteils (26) des ersten Turboladers (23) verbunden ist, um diesem ein Kraftstoff-Luft-Gemisch zuzuführen, und der Einlaß zum Verdichterteil (33) des zweiten Turboladers (28) ist lediglich mit einer Zwischenleitung (27) verbunden, die an ihrem anderen Ende mit dem Auxlaß des Turbinenteils (24) des ersten Turboladers (23) verbunden ist, so daß nur Abgase dem Verdichterteil (33) des zweiten Turboladers (28) zugeführt werden.

**0 046 156**

1